(19) Europäisches Patentamt
European Patent Office
Office européen des brevets

(11) EP 2 300 506 B2

(12) NEW EUROPEAN PATENT SPECIFICATION
After opposition procedure

(45) Date of publication and mention of the opposition decision:
**09.11.2016 Bulletin 2016/45**

(45) Mention of the grant of the patent:
**28.11.2012 Bulletin 2012/48**

(21) Application number: **09789918.1**

(22) Date of filing: **24.06.2009**

(51) Int Cl.:
***B32B 25/02*** $^{(2006.01)}$ ***B32B 25/14*** $^{(2006.01)}$
***C08F 279/02*** $^{(2006.01)}$ ***C08L 51/04*** $^{(2006.01)}$
***C08L 55/02*** $^{(2006.01)}$ ***C08L 69/00*** $^{(2006.01)}$

(86) International application number:
**PCT/US2009/048365**

(87) International publication number:
**WO 2010/008875 (21.01.2010 Gazette 2010/03)**

# (54) IMPROVED LOW GLOSS ABS COMPOSITIONS, METHODS AND ARTICLE

VERBESSERTE ABS-ZUSAMMENSETZUNGEN MIT MATTGLANZ UND VERFAHREN

COMPOSITIONS D’ABS DE FAIBLE BRILLANCE AMÉLIORÉES ET PROCÉDÉS

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.07.2008 US 81214 P**

(43) Date of publication of application:
**30.03.2011 Bulletin 2011/13**

(73) Proprietor: **Trinseo Europe GmbH**
**8810 Horgen (CH)**

(72) Inventors:
- **MAES, Dominique**
  **B-9080 Lochristi (BE)**
- **LEWIS, Ray Avery**
  **Midland**
  **MI 48642 (US)**
- **TURMEL, Denis**
  **B-9000 Gent (BE)**
- **VAN DUIN, Kees-Jeen**
  **NL-4562 AJ Hulst (NL)**
- **VAN DAELE, Ronald**
  **B-9111 Belsele (BE)**
- **DE BOKX, Alexander**
  **NL-4551EP Sas Van Gent (NL)**

(74) Representative: **Hoffmann Eitle**
**Patent- und Rechtsanwälte PartmbB**
**Arabellastraße 30**
**81925 München (DE)**

(56) References cited:
**EP-A- 0 067 536**
**WO-A-2005/108447**
**WO-A-2007/047120**
**US-A- 5 470 915**
**US-A1- 2006 058 466**

EP 2 300 506 B2

## Description

FIELD OF THE INVENTION

This invention relates to rubber-modified monovinylidene aromatic copolymer compositions, specifically acrylonitrile, butadiene, and styrene terpolymers with an excellent balance of aesthetic, physical and mechanical properties, in particular, an improved combination of very low gloss and good impact resistance in extruded sheet and articles made therefrom and a method for preparing such compositions and articles.

BACKGROUND OF THE INVENTION

Acrylonitrile, butadiene, and styrene terpolymer (ABS) resins are well known calendering, molding and extrusion materials. Such resins are generally referred to as graft copolymers. The resins are readily obtained by polymerizing styrene and acrylonitrile in the presence of a conjugated diene polymer, usually polybutadiene. The ABS resins are generally a mixture of rubber particles dispersed in a styrene-acrylonitrile matrix, at least a part of the styrene and acrylonitrile usually being grafted onto the elastomeric polybutadiene backbone.

Products prepared from ABS resins are often times glossy, yet for some applications this is not a desirable property. For instance, molded and extruded articles such as computer housings, keyboards, appliance housings, luggage, protective covers, exterior and interior automotive parts, wall panels, serving trays, seat backs, and the like, require low gloss or mat surface. It is very desirable that ABS resins used for fabricating such parts exhibit good impact strength as well as low gloss.

ABS resins made by the mass process (sometimes referred to as bulk, mass-solution, or mass-suspension polymerization process) exhibit inherently lower gloss than ABS resins made by an emulsion process. The mass process involves dissolving polybutadiene in a mixture of styrene monomer, acrylonitrile monomer, and a solvent, and the subsequent graft reaction between the monomers and the polybutadiene and a co-polymerization of the monomers. At the end of the reaction, relatively large particles of rubber are created which may contain some occluded styrene-acrylonitrile copolymer. The large particle size of these rubbery domains is believed to be, in part, responsible for the lower gloss surface finish of mass produced ABS. Mass ABS provides an excellent balance of properties including ambient and low temperature impact, stiffness, inherently low gloss, chemical resistance and processability. However, conventional mass ABS resins may not demonstrate a low enough gloss when extruded into sheet and then thermoformed into molded articles.

In view of the deficiencies of the present ABS resins available for extrusion applications it would be desirable to have a resin which maintains a good balance of physical properties but has lower inherent gloss when embossed, calendered, laminated, extruded, and/or coextruded into sheet and for thermoformed and/or vacuum formed articles made therefrom.

SUMMARY OF THE INVENTION

Accordingly, the present invention is such a desirable resin which affords a good balance of processability. color consistency, stiffness, impact, low odor, low gel content, and chemical resistance combined with a very low gloss and a consistent low gloss appearance across the surface of a fabricated article with or without a texture and/or grain.

The present invention is a mass polymerized rubber-modified monovinylidene aromatic copolymer composition comprising: (i) a continuous matrix phase, preferably in an amount from 60 to 90.5 weight percent, comprising a copolymer of a monovinylidene aromatic monomer, preferably styrene, and 15 to 50 weight percent, based on the total weight of the matrix copolymer, of an ethylenically unsaturated nitrile monomer, preferably in an amount from 10 to 35 weight percent and preferably acrylonitrile, and (ii) a rubber component, preferably in an amount from 40 to 9.5 weight percent and preferably a 1, 3-butadiene homopolymer or a 1, 3-bautadiene and styrene block copolymer, dispersed as discrete particles in the matrix wherein weight percent is based on the total weight of the mass polymerized rubber-modified monovinylidene aromatic copolymer composition and the rubber particles have an average rubber particle size (RPS in microns) equal to or greater than 5 microns as determined by light scattering LS230 and the matrix has a weight average molecular weight (Mw in kg/mole) represented by the following formula:

$$Mw \geq 155 - 10^{-6} \cdot RPS^{6}.$$

Preferably, the disclosed mass polymerized rubber-modified monovinylidene aromatic copolymer composition is in the form of a (co)extruded sheet, firm, pipe, or profile. More preferably, the disclosed mass polymerized rubber-modified

monovinylidene aromatic copolymer composition is in the form of a thermoformed or vacuum formed fabricated article, preferably a building and construction part, an automotive part, a boat part, a plane part, a truck part, a van part, a bus part, a recreational vehicle part, an information technology equipment part, a furniture part, a diffuser board. or an appliance part.

In another embodiment, the mass polymerized rubber-modified monovinylidene aromatic copolymer composition described hereinabove further comprises a comonomer selected from n-butyl acrylate and/or N-phenyl maleimide.

In another embodiment, the mass polymerized rubber-modified monovinylidene aromatic copolymer composition described hereinabove further comprises a polycarbonate (PC) resin and is preferably a polycarbonate and acrylonitrile, butadiene, and styrene (ABS) terpolymer blend (PC/ABS).

A further embodiment of the present invention is a method for preparing a mass polymerized robber-modified monovinylidene aromatic copolymer composition comprising the steps of: (a) polymerizing by bulk, mass-solution, or mass polymerization techniques in the presence of a dissolved rubber component a monovinylidene aromatic monomer, preferably styrene, and an ethylenically unsaturated nitrile monomer, preferably acrylonitrile, optionally in the presence of an inert solvent, forming a mixture containing a continuous matrix copolymer phase, the matrix copolymer including 15 to 50 weight percent of units, based on the total weight of the matrix copolymer, derived from the ethylenically unsaturated nitrile monomer, and wherein the rubber component is dispersed therein as discrete rubber particles, (b) subjecting the resultant mixture to conditions sufficient to remove any unreacted monomers and to cross-link the rubber, and

(c) isolating the rubber-modified monovinylidene aromatic copolymer composition wherein the rubber particles have an average rubber particle size (RPS in microns) equal to or greater than 5 microns as determined by light scattering LS230 and the matrix has a weight average molecular weight (Mw in kg/mole) represented by the following formula:

$$Mw \geq 155 - 10^{-6} \cdot RPS^{6}.$$

Yet another embodiment of the present invention is a method for producing a (co)extruded sheet, pipe, film, or profile of the mass polymerized rubber-modified monovinylidene aromatic copolymer composition disclosed hereinabove comprising the steps of: (A) preparing a mass polymerized rubber-modified monovinylidene aromatic copolymer composition by the method described hereinabove and (B) (co)extruding said rubber-modified monovinylidene aromatic copolymer composition into an (co)extruded sheet, pipe, film, or profile.

Yet another embodiment of the present invention is a method for producing a thermoformed or vacuum formed fabricated article from a (co)extruded sheet or film of the mass polymerized rubber-modified monovinylidene aromatic copolymer composition disclosed hereinabove comprising the steps of: (A) preparing a mass polymerized rubber-modified monovinylidene aromatic copolymer composition by the method described hereinabove. (B) (co)extruding said rubber-modified monovinylidene aromatic copolymer composition into an (co)extruded sheet or film, and ((C) thermoforming or vacuum forming the (co)extruded sheet or film into a fabricated article. Preferably, the thermoformed or vacuum formed fabricated article is a building and construction part, an automotive part, a boat part, a plane part, a truck part, a van part, a bus part, a recreational vehicle part, an information technology equipment part, a furniture part, a diffuser board, an appliance part, or the like.

Yet another embodiment of the present invention is a method for producing a laminated sheet, film or profile of a mass polymerized rubber-modified monovinylidene aromatic copolymer composition disclosed hereinabove comprising the steps of: (A) preparing a mass polymerized rubber-modified monovinylidene aromatic copolymer composition by the method disclosed hereinabove. (B) calendering said rubber-modified monovinylidene aromatic copolymer composition into a film, and (C) laminating the film onto an (co)extruded thermoplastic sheet, film, or profile to form a laminated sheet, film or profile. Preferably, the laminated sheet or film is thermoformed or vacuum formed into a fabricated article, preferably a building and construction part, an automotive part, a boat part, a plane part, a truck part, a van part, a bus part, a recreational vehicle part, an information technology equipment part, a furniture part, a diffuser board, an appliance part, or the like.

BRIEF DESCRIPTION OF THE DRAWINGS

FIG.1 is a schematic side elevation view of a vertical roll-stack in an up-stack configuration utilized in a sheet extrusion process;

FIG.2 is a schematic side elevation view of a vertical roll-stack in a down-stack configuration utilized in a sheet extrusion process; and

FIG.3 is a schematic side elevation view of an apparatus for extruding sheet from the polymerized rubber-modified monovinylidene aromatic copolymer composition the present invention.

DETAILED DESCRIPTION OF THE INVENTION

Suitable rubber-modified monovinylidene aromatic copolymers employed in the present invention comprise a monovinylidene aromatic and ethylenically unsaturated nitrile copolymer in a matrix or continuous phase and rubber particles dispersed in the matrix. The matrix or continuous phase of the present invention is a copolymer comprising polymerized therein a monovinylidene aromatic monomer and an ethylenically unsaturated nitrile monomer or a copolymer comprising polymerized therein a monovinylidene aromatic monomer, an ethylenically unsaturated nitrile monomer and one or more vinyl monomer that can be copolymerized with them. Copolymer, as used herein, is defined as a polymer having two or more monomers interpolymerized. These compositions are generically known as SAN-type or SAN since poly (styrene-acrylonitrile) is the most common example.

Various techniques suitable for producing rubber-modified monovinylidene aromatic copolymer are well known in the art. Examples of these known polymerization processes include bulk, mass-solution, or mass-suspension polymerization, generally known as mass polymerization processes. For a good discussion of how to make rubber-modified monovinylidene aromatic copolymer see "Modern Styrenic Polymers" of Series In Polymer Science (Wiley), Ed. John Scheirs and Duane Priddy, ISBN 0 471 497525. Also, for example, USP 3,660,535; 3,243,481; and 4,239,863, which are incorporated herein by reference.

In general, continuous mass polymerization techniques are advantageously employed in preparing the rubber-modified monovinylidene aromatic copolymer of the present invention. Preferably, the polymerization is conducted in one or more substantially linear, stratified flow or so-called "plug-flow" type reactor such as described in USP 2,727,884, sometimes referred to as multizone plug flow bulk process, which may or may not comprise recirculation of a portion of the partially polymerized product or, alternatively, in a stirred tank reactor wherein the contents of the reactor are essentially uniform throughout, which stirred tank reactor is generally employed in combination with one or more plug-flow type reactors. Alternatively, a parallel reactor set-up, as taught in EP 412801, may also be suitable for preparing the rubber-modified monovinylidene aromatic copolymer of the present invention.

Multizone plug flow bulk processes include a series of polymerization vessels (or towers), consecutively connected to each other, providing multiple reaction zones. A rubber, for example butadiene rubber (stereospecific) is dissolved in a mixture of monovinylidene aromatic comonomers, for example styrene (S) and acrylonitrile (AN), and the rubber solution is then fed into the reaction system. The polymerization can be thermally or chemically initiated, and viscosity of the reaction mixture will gradually increase. During the reaction course, the rubber will be grafted with S/AN polymer (grafted SAN) and, in the rubber solution, bulk SAN (referred to also as free SAN or matrix SAN or non-grafted SAN) is also being formed. At a point where the free SAN (that is non-grafted SAN) can not be "held" in one single, continuous "phase" of rubber solution, it begins to form domains of SAN dissolved in monomer and solvent. The polymerization mixture now is a two-phase system. As polymerization proceeds, more and more free SAN is formed, and the rubber phase starts to disperse itself (rubber domains) in the matrix of the ever-growing free SAN phase. Eventually, the free SAN becomes a continuous phase. This is actually a formation of an "oil-in-oil emulsion" system. Some SAN is occluded inside the rubber particles as well. This stage is usually given a name of phase inversion. Pre-phase inversion means that the rubber solution is a continuous phase and that no rubber particles are formed, and post phase inversion means that substantially all of the rubber phase has converted to rubber domains and there is a continuous SAN phase. Following the phase inversion, more matrix SAN (free SAN) is formed and, possibly, the rubber particles gain more grafted and free SAN.

A feed with a functional monomer such as N-phenylmaleimide that increases the Tg of the matrix and also the heat resistance of the product can be added in one or more location throughout the polymerization process, the location(s) may be the same or different from where the styrene and acrylonitrile monomers are added, for example see USP 5,412,036 and 5,446,103, which are incorporated herein by reference.

A feed with a functional monomer such as n-butylactylate that increases the processability of the product can be added.

A feed with a functional additive such as ethylene-bisstearamide, dialkyladipates, polydimethylsiloxane, or other lubricants or release agents that increases the processability of the product can be added in one or more location throughout the polymerization, devolatization and conveying process, the location(s) may be the same or different from where the styrene and acrylonitrile monomers are added,

When a desirable monomer conversion level and a matrix SAN of desired molecular weight distribution is obtained, the polymerization mixture is then subjected to conditions sufficient to cross-link the rubber and remove any unreacted monomer and solvent. Such cross-linking and removal of unreacted monomer, as well as removal of diluent or solvent, if employed, and other volatile materials is advantageously conducted employing conventional devolatilization techniques, such as introducing the polymerization mixture into a devolatilizing chamber, flashing off the monomer and

other volatiles at elevated temperatures, for example, from 130□C to 300□C and/or under vacuum and removing them from the chamber. Finally, the polymer is extruded and bulk ABS pellets are obtained from a pelletizer.

The temperatures at which polymerization is most advantageously conducted are dependent on a variety of factors including the specific initiator and type and concentration of rubber, comonomers, reactor set-up (for example, linear, parallel, recirculation, etc.), and reaction solvent, if any, employed. In general, polymerization temperatures from 60□C to 160□C are employed prior to phase inversion with temperatures from 100□C to 190□C being employed subsequent to phase inversion. Mass polymerization at such elevated temperatures is continued until the desired conversion of monomers to polymer is obtained. Generally, conversion (also sometimes referred to as percent solids) of from 55 to 90, preferably 60 to 85, weight percent of the monomers added to the polymerization system (that is, monomers added in the feed and any additional stream, including any recycle stream) to polymer is desired. Percent solids is the ratio of the weight of the solids (for example, rubber plus matrix (co)polymer) to the weight of the reaction mixture (for example, unpolymerized monomer(s)) expressed in percent at any specified time during the polymerization reaction.

To synthesize rubber-modified monovinylidene aromatic copolymer with high performance by the mass process, four aspects are essential among many others. These aspects are grafting of the rubber substrate prior to phase inversion, rubbery domain and/or particle formation or sizing during phase inversion, building molecular weight and molecular weight distribution of the matrix, and cross-linking of the rubber particle at the completion point of the mass polymerization.

Alternatively, a combination of mass and suspension polymerization techniques are employed. Using said techniques, following phase inversion and subsequent size stabilization of the rubber particles, the partially polymerized product can be suspended with or without additional monomers in an aqueous medium which contains a polymerized initiator and polymerization subsequently completed. The rubber-modified monovinylidene aromatic copolymer is subsequently separated from the aqueous medium by acidification, centrifugation or filtration. The recovered product is then washed with water and dried.

A polymer's molecular weight is directly related to the entanglement effects contributing to its rheological and physical properties. The molecular weight of the matrix copolymer produced in the grafting reactor during the production of the rubber-modified monovinylidene aromatic copolymer of the present invention can be adjusted by the addition of a suitable chain transfer agent. Chain transfer agents, or molecular weight regulators, are substances which can undergo atom or group transfer or an addition-elimination. Organic molecules with labile hydrogens and are well known, for example, alpha-methyl styrene dimer, mercaptans or thiols such as n-dodecylmercaptan (nDM) and thioglycolate, disulfides, dithiauram disulfides, monosulfides, halides or halocarbons, common solvents and certain unsaturated compounds such as allyl peroxides, allyl halides, allyl sulfides, and terpenes such as terpinoline. Also transition metal complexes as cobalt(II) porphyrin complexes can be used as transfer agent. Chain transfer agents are added in an amount from about 0.0001 to 10 weight percent based on the weight of the reaction mixture (that is, rubber, monorner(s), and solvent, if any). Preferably, the chain transfer agent in the present invention is added in an amount equal to or greater than about 0.001 weight percent, preferably 0.002, and more preferably. 0.003 weight percent based on the weight of the reaction mixture. Preferably, the chain transfer agent in the present invention is added in an amount equal to or less than about 0.5 weight percent, preferably 0.2, and more preferably, 0.1 weight percent based on the weight of the reaction mixture.

The chain transfer agent may be added all at once in one reactor zone or preferably, it may be added in two or more reactor zones. Chain transfer agent may be added before phase inversion, during rubber particle sizing, more may be added after particle sizing to help control the matrix molecular weight, and optionally more may be added later to fine tune the matrix molecular weight/molecular weight distribution. The chain transfer agent is preferentially added at the beginning of the polymerization in the present invention (in other words, at a time where the percent solids for the reaction mixture is equal to the weight percent rubber) in a first amount equal to or greater than 0.001 weight percent, preferably between about 0.002 and about 0.1 weight percent, and more preferably between about 0.003 and about 0.05 weight percent based on the weight of the reaction mixture. The amount of chain transfer agent added later, for example after about 40 percent solids, preferably 30 percent solids, is added in a second amount equal to or less than about 0.7 weight percent, preferably between about 0.001 and about 0.6 weight percent, and more preferably between about 0.002 and about 0.5 weight percent based on the weight of the reaction mixture. The molecular weight of the matrix copolymer in the rubber-modified monovinylidene aromatic copolymer of the present invention depends on, among other things, how much chain transfer agent is used and when it is added.

It is well known that it is possible to achieve lower gloss with rubber-modified monovinylidene aromatic copolymers made by the mass process. A deficiency with present mass rubber-modified monovinylidene aromatic copolymers is that, although they may have a low inherent gloss, the gloss level can vary in the finished article depending on how the article is made or even by what type of equipment is used to make the article (fabricational effects). Many composition/process factors (compositional effects) affect the gloss of a mass rubber-modified monovinylidene aromatic copolymer. A key compositional effect that contributes to the gloss of mass rubber-modified monovinylidene aromatic copolymers is the rubber, specifically, the rubber particle size (RPS); it is generally believed that larger rubber particles contribute to lower gloss. The process of the present invention is an improvement over the prior art because the mass

rubber-modified monovinylidene aromatic copolymer made by the present invention demonstrates even lower gloss in fabricated articles than rubber-modified monovinylidene aromatic copolymers from conventional processes. In other words, the rubber-modified monovinylidene aromatic copolymers made by the process of the present invention maximize the compositional effects which lower inherent gloss across a broad range of fabricational effects.

Many factors affect the rubber particle size, to name a few, rubber type, rubber amount, rubber molecular weight, matrix molecular weight, reaction temperature, shear rate, etc. To obtain large rubber particle size, conventional art teaches keeping the viscosity of the prepolymer (matrix polymer) after phase inversion low to decrease the shear on the rubber phase during sizing, thus creating large particles. Conventional art teaches one way to keep the matrix polymer molecular weight low is by adding high levels of chain transfer agent. After considerable time and effort, we have discovered a surprising relationship between higher matrix molecular weight and larger rubber particle size which demonstrates a lower gloss in fabricated articles from the rubber-modified monovinylidene aromatic copolymer made by the process of the present invention.

Preferably, the amount of chain transfer agent and when it is added to the process for making the rubber-modified monovinylidene aromatic copolymer of the present invention, is such that the weight average molecular weight ($M_w$) of the matrix copolymer is equal to or greater than about $155 - 10^{-6} \cdot RPS^6$, preferably equal to or greater than about $158 - 10^{-6} \cdot RPS^6$, and most preferably equal to or greater than about $160 - 10^{-6} \cdot RPS^6$. Preferably, the amount of chain transfer agent and when it is added to the process for making the rubber-modified monovinylidene aromatic copolymer of the present invention, is such that the weight average $M_w$ of the matrix copolymer is equal to or less than about $220 - 10^{-6} \cdot RPS^6$, preferably equal to or less than about to $200 - 10^{-6} \cdot RPS^6$, more preferably equal to or less than about $180 - 10^{-6} \cdot RPS^6$, and most preferably equal to or less than about $175 - 10^{-6} \cdot RPS^6$. One skilled in the art can determine the amount of chain transfer agent and the timing as to when to add it without undue experimentation. Matrix molecular weight, unless otherwise specified, is weight average molecular weight and is measured by gel permeation chromatography (GPC) using narrow molecular weight polystyrene standards, and is given in units of kilogram per mole (kg/mole).

Monovinylidene aromatic monomers include but are not limited to those described in USP 4,666,987; 4,572,819 and 4,585,825, which are herein incorporated by reference. Preferably, the monomer is of the formula:

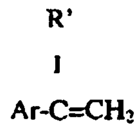

wherein R is hydrogen, methyl, or alkyl, and Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group. Preferably, Ar is phenyl or alkylphenyl, wherein alkylphenyl refers to an alkyl substituted phenyl group, with phenyl being most preferred. Preferred monovinylidene aromatic monomers include: styrene, alphamethylstyrene, all isomers of vinyl toluene, especially paravinyltoluene, all isomers of ethyl styrene, propyl styrene, vinyl biphenyl, vinyl naphthalene, vinyl anthracene and the like, and mixtures thereof.

Typically, such monovinylidene aromatic monomer will constitute from an amount equal to or greater than about 50 weight percent, preferably from an amount equal to or greater than about 60 weight percent, more preferably from an amount equal to or greater than about 65 weight percent, and most preferably from an amount equal to or greater than about 70 weight percent based on the total weight of the matrix copolymer. Typically, such monovinylidene aromatic monomer will constitute less than or equal to about 95 weight percent, preferably less than or equal to about 85 weight percent, more preferably less than or equal to about 80 weight percent, and most preferably less than or equal to about 75 weight percent based on the total weight of the matrix copolymer.

Unsaturated nitriles include, but are not limited to, acrylonitrile, methacrylonitrile, ethacrylonitrile, fumaronitrile and mixtures thereof. The unsaturated nitrile is generally employed in the matrix copolymer in an amount equal to or greater than 15 weight percent, and most preferably in an amount equal to or greater than about 20 weight percent based on the total weight of the matrix copolymer. The unsaturated nitrile is employed in the matrix copolymer in an amount less than or equal to about 50 weight percent, preferably equal to or less than about 45 weight percent, more preferably less than or equal to about 35 weight percent, and most preferably less than or equal to about 30 weight percent based on the total weight of the matrix copolymer.

Other vinyl monomers may also be included in polymerized form in the matrix copolymer, including conjugated 1,3 dienes (for example butadiene, isoprene, etc.); alpha- or beta-unsaturated monobasic acids and derivatives thereof (for example, acrylic acid, methacrylic acid, etc., and the corresponding esters thereof such as methylacrylate, ethylacrylate, n-butyl acrylate, iso-butyl acrylate, methyl methacrylate, etc.); vinyl halides such as vinyl chloride, vinyl bromide, etc.; vinylidene chloride, vinylidene bromide, etc.; vinyl esters such as vinyl acetate, vinyl propionate, etc.; ethylenically

unsaturated dicarboxylic acids and anhydrides and derivatives thereof , such as maleic acid, fumaric acid, maleic anhydride, dialkyl maleates or fumarates, such as dimethyl maleate, diethyl maleate, dibutyl maleate, the corresponding fumarates, N-phenyl maleimide (NPMI), etc.; and the like. These additional comonomers can be incorporated in to the composition in several ways including, interpolymerization with the monovinylidene aromatic and ethylenically unsaturated nitrile matrix copolymer and/or polymerization into polymeric components which can be combined, for example blended in to the matrix. If present, the amount of such comonomers will generally be equal to or less than about 20 weight percent, more preferably equal to or less than about 10 weight percent and most preferably less than or equal to about 5 weight percent based on the total weight of the matrix copolymer.

The matrix copolymer is present in an amount equal to or greater than about 60 weight percent, preferably equal to or greater than about 70 weight percent, more preferably equal to or greater than about 75 weight percent, even more preferably equal to or greater than about 80 weight percent and most preferably equal to or greater than about 82 weight percent based on the weight of the rubber-modified monovinylidene aromatic copolymer. The matrix copolymer is present in an amount equal to or less than about 90.5 weight percent, preferably equal to or less than about 90 weight percent, more preferably equal to or less than about 89 weight percent, and most preferably equal to or less than about 88 weight percent based on the weight of the rubber-modified monovinylidene aromatic copolymer.

Various rubbers are suitable for use in the present invention. The rubbers include diene rubbers, ethylene propylene rubbers, ethylene propylene diene (EPDM) rubbers, ethylene copolymer rubbers, acrylate rubbers, polyisoprene rubbers, halogen containing rubbers, and mixtures thereof. Also suitable are interpolymers of rubber-forming monomers with other copolymerizable monomers.

Preferred rubbers are diene rubbers such as polybutadiene, polyisoprene, polypiperylene, polychloroprene, and the like or mixtures of diene rubbers, that is, any rubbery polymers of one or more conjugated 1, 3-dienes, with 1, 3-butadiene being especially preferred. Such rubbers include homopolymers of 1, 3-butadiene and copolymers of 1, 3-butadiene with one or more copolymerizable monomers, such as monovinylidene aromatic monomers as described hereinabove, styrene being preferred. A preferred polybutadiene is the homopolymer of 1, 3-butadiene. Preferred copolymers of 1, 3-butadiene are block or tapered block rubbers of at least about 30 weight percent 1, 3-butadiene rubber, more preferably from about 50 weight percent, even more preferably from about 70 weight percent, and most preferably from about 90 weight percent 1, 3-butadiene rubber and up to about 70 weight percent monovinylidene aromatic monomer, more preferably up to about 50 weight percent, even more preferably up to about 30 weight percent, and most preferably up to about 10 weight percent monovinylidene aromatic monomer, weights based on the weight of the 1, 3-butadiene copolymer.

Linear block copolymers can be represented by one of the following general formulas:

S-B;
$S_1$-B-$S_2$;
$B_1$-$S_1$-$B_2$-$S_2$;

In which S, $S_1$, and $S_2$ are non-elastic polymer blocks of a monovinylidene aromatic monomer, with equal or different molecular weights and B, $B_1$, and $B_2$ are elastomeric polymer blocks based on a conjugated diene, with equal or different molecular weights. In these linear block copolymers, the non-elastic polymer blocks have a molecular weight of between 5,000 and 250,000 and the elastomeric polymer blocks have a molecular weight of between 2,000 and 250,000. Tapered portions can be present among the polymer blocks, S, $S_1$, and $S_2$ and B, $B_1$, and $B_2$. In the tapered portion the passage between the blocks B, $B_1$, and $B_2$ and S, $S_1$, and $S_2$ can be gradual in the sense that the proportion of monovinylidene aromatic monomer in the diene polymer increases progressively in the direction of the non-elastomeric polymer block, whereas the portion of conjugated diene progressively decreases. The molecular weight of the tapered portions is preferably between 500 and 30,000. These linear block copolymers are described for example in USP 3,265,765 and can be prepared by methods well known in the art. Further details on the physical and structural characteristics of these copolymers are given in B.C. Allport et al. "Block Copolymers", Applied Science Publishers Ltd., 1973.

The rubbers preferably employed in the practice of the present invention are those polymers and copolymers which exhibit a second order transition temperature, sometimes referred to as the glass transition temperature (Tg), for the diene fragment which is not higher than 0□C and preferably not higher than -20□C as determined using conventional techniques, for example ASTM Test Method D 746-52 T. Tg is the temperature or temperature range at which a polymeric material shows an abrupt change in its physical properties, including, for example, mechanical strength. Tg can be determined by differential scanning calorimetry (DSC).

The rubber in the rubber-modified monovinylidene aromatic copolymer of the present invention is present in an amount equal to or greater than about 5 weight percent, preferably equal to or greater than about 8 weight percent, more preferably equal to or greater than about 9.5 weight percent, even more preferably equal to or greater than about 10 weight percent, and even more preferably equal to or greater than about 12 weight percent based on the weight of the rubber-modified monovinylidene aromatic copolymer. The rubber in the rubber-modified monovinylidene aromatic

copolymer of the present invention is present in an amount equal to or less than about 40 weight percent, preferably equal to or less than about 30 weight percent, more preferably equal to or less than about 25 weight percent, even more preferably equal to or less than about 20 weight percent, and most preferably equal to or less than about 18 weight percent based on the weight of the rubber-modified monovinylidene aromatic copolymer.

Preferred structures for the rubber dispersed in the matrix copolymer are one or more branched rubber, one or more linear rubber or combinations thereof. Branched rubbers, as well as methods for their preparation, are known in the art. Representative branched rubbers and methods for their preparation are described in Great Britain Patent No. 1,130,485 and in Macromolecules, Vol. II, No. 5, pg. 8, by R. N. Young and C. J. Fetters.

A preferred branch rubber is a radial or star-branched polymer, commonly referred to as polymers having designed branching. Star-branched rubbers are conventionally prepared using a polyfunctional coupling agent or a polyfunctional initiator and have three or more polymer segments sometimes referred to as arms, preferably between three to eight arms, bonded to a single polyfunctional element or compound, represented by the formula (rubber polymer segment$)_k\Omega$ wherein preferably, k is an integer from 3 to 8, and Q is a moiety of a polyfunctional coupling agent. Organometalic anionic compounds are preferred polyfunctional initiators, particularly lithium compounds with $C_{1-6}$ alkyl, $C_6$ aryl, or $C_{7-20}$ alkylaryl groups. Tin-based and polyfunctional organic coupling agents are preferably employed; silicon-based polyfunctional coupling agents are most preferably employed.

The arms of the star-branched rubber are preferably one or more 1, 3-butadiene rubber, more preferably they are all the same type of 1, 3-butadiene rubber, that is, 1, 3-butadiene tapered block copolymer(s), 1, 3-butadiene block copolymer(s) or 1, 3-butadiene homopolymer(s) or a combination thereof.

Methods for preparing star-branched or radial polymers having designed branching are well known in the art. Methods for preparing a polymer of butadiene using a coupling agent are illustrated in USP 4,183,877; 4,340,690; 4,340,691 and 3,668,162, whereas methods for preparing a polymer of butadiene using a polyfunctional initiator are described in USP 4,182,818; 4,264,749; 3,668,263 and 3,787,510, all of which are herein incorporated by reference. Other star-branched rubbers useful in the composition of the present invention include those taught in USP 3,280,084 and USP 3,281,383, which are incorporated herein by reference.

Linear rubbers, as well as methods for their preparation, are well known in the art. The term "linear rubber" refers to straight chains of polymerized monomer or comonomers which include uncoupled and dicoupled rubber wherein one or two polymeric segments or arms have been attached to a multifunctional coupling agent represented by the formula (rubber polymer segment$)_k\Omega$ wherein k is an integer from 1 to 2. The rubber polymer segments in a dicoupled linear rubber having the formula (rubber polymer segment$)_2\Omega$, can be the same type, that is, both 1, 3-butadiene homopolymers, more preferably 1, 3-butadiene taper block copolymers, and most preferably 1, 3-butadiene block copolymers, or they can be different, for example, one rubber polymer segment can be a 1, 3-butadiene homopolymer and the other polymer segment a 1, 3-butadiene block copolymer. Preferably, the linear rubber is one or more 1, 3-butadiene homopolymer, more preferably one or more 1, 3-butadiene tapered block copolymer, most preferably one or more 1, 3-butadiene block copolymer or combinations thereof. The preferred comonomers comprising the tapered block copolymer and/or block copolymer linear rubber are styrene and butadiene.

Preferably a diene rubber used in the invention has a cis content equal to or less than 99 percent and preferably equal to or less than 97 percent. Preferably the cis content of the diene rubber will be equal to or greater than 20 percent and preferably equal to or greater than 37 percent wherein the cis weight percent is based on the weight of the diene rubber.

A preferred rubber is a 1,3-butadiene rubber having at least about 1 weight percent 1,2-vinyl and more preferably at least about 7 weight percent 1,2-vinyl based on the weight of the 1, 3-butadiene rubber. Preferably the 1,3-butadiene rubber has less than or equal to about 30 weight percent 1,2-vinyl and more preferably less than or equal to about 13 weight percent 1,2-vinyl based on the weight of the 1, 3-butadiene rubber.

A preferred rubber is a diene rubber having a weight average molecular weight of at least about 100 kilogram per mole (kg/mole) and more preferably having a weight average molecular weight of at least about a 300 kg/mole. Preferably the diene rubber has a weight-average molecular weight equal to or less than about 900 kg/mole and more preferably a weight average molecular weight equal to or less than 600 kg/mole.

A preferred rubber is a diene rubber having a solution viscosity of at least 10 centi Stokes (Cst) (10 percent (%) solution in styrene) and more preferably a solution viscosity of about 30 Cst. Preferably the diene rubber has a solution viscosity equal to or less than about 500 Cst and more preferably equal to or less than about 400 Cst.

The rubber, with graft and/or occluded polymers if present, is dispersed in the continuous matrix phase as discrete particles. The rubber particles may comprise a range of sizes having a mono-modal, bimodal, or multimodal distribution. The average particle size of a rubber particle, as used herein, will, refer to the volume average diameter. In most cases, the volume average diameter of a group of particles is the same as the weight average. The average particle diameter measurement generally includes the polymer grafted to the rubber particles and occlusions of polymer within the particles.

The (average) rubber particle size (diameter) of the rubber-modified monovinylidene aromatic copolymer is a major contributing factor to its inherent gloss. Gloss tends to decrease with increasing particle size. The rubber particle

size is affected by many parameters, rubber viscosity, grafting, matrix viscosity, polymerization temperature, and shear to name a few.

Unless otherwise specified, the preferred rubber particle sizes disclosed and claimed herein are determined by a light scattering method using a Beckman Coulter Particle Characterization LS-230 instrument and LS230 Beckman Particle Characterization software, version 3.01. The average particle size of the rubber particles is equal to or greater than about 5 microns (□m), preferably equal to or greater than about 6 microns, and more preferably equal to or greater than about 7 microns. The average particle size of the rubber particles is equal to or less than about 30 microns, preferably equal to or less than about 25 microns, and more preferably equal to or less than about 20 microns.

Not to be held to any particular theory, we believe that when the rubber-modified monovinylidene aromatic copolymers made by the process of the present invention are calendered into film, extruded into sheet, or coextruded into sheet, the rubber particles store elastic energy during straining or drawing in the molten state and/or during the solidification process. In a fabricated article, relaxation of the stored energy in the rubber particles on the surface of the article when the temperature of the skin is above the glass transition temperature (Tg) of the matrix results in increased surface roughness which scatters light, thus reducing gloss. We believe, the amount of stored elastic energy is directly related to the molecular weight of the matrix, the higher the molecular weight, the higher the stored elastic energy. Thus, the hereindisclosed relationship which is based on higher matrix molecular weight and larger rubber particle size surprisingly maximizes the potential for lower gloss in articles fabricated from the rubber-modified monovinylidene aromatic copolymers made by the process of the present invention. The crosslinking of the rubber as measured by LAR determines the time aspect of the storing/relaxation process. A higher degree of crosslinking leads to a faster relaxation of the rubber particle.

Unless otherwise noted, specular gloss or gloss measurements reported herein are determined according to ISO 2813:1994/Cor.1:1997(E). Sample preparation for gloss determination is disclosed hereinbelow and the measuring step is performed on a BYK-Gardner gloss-meter (model micro-TRI-gloss, 20-60-85°, reference 4520) using the 60° angle setting and are expressed in gloss units (GU). Specular gloss is defined as the ratio of the amount of light reflected from the sample surface to the amount of light reflected from a reference sample, both of which are evaluated under identical conditions. The reference sample is a black glass standard with a defined refractive index. Gloss data reported herein is measured from sheet produced using highly polished gloss rolls, that is without any form of embossing.

The Sheet gloss (hot-side) is the 60° gloss measured after sheet cooling on the outer side **31.** Side **31** corresponds to the side initially in contact with air when the sheet moves from gloss roll **3** to gloss roll **4**; this allows further relaxation of the polymer surface (sometimes referred to as polymer skin).

The Sheet gloss (quenched-side or q-side) is the 60° gloss measured after cooling on side **32.** Side **32** corresponds to the side initially in contact with the metal of the gloss roll **4** when the sheet travels from gloss roll **3** to gloss roll **4.** Typically, the maximum roll temperature is below the glass transition of the polymer and side **32** reflects the state of a sheet before full expression of the potential degree of mat or low gloss.

The Sheet gloss (130°C) is the 60° gloss measured on side **31** after cooling and subsequent reheating for two minutes at 130°C.

The Sheet gloss (140°C) is the 60° gloss measured on side **31** after cooling and subsequent reheating for two minutes at 140°C.

The Sheet gloss (150°C) is the 60° gloss measured on side **31** after cooling and subsequent reheating for two minutes at 150°C.

Preferably the impact resistance of the rubber-modified monovinylidene aromatic copolymer composition of the present invention, as determined by Notched Charpy method, ISO 179-1/1eA is equal to or greater than about 8 kilo Joule per square meter ($kJ/m^2$), more preferably equal to or greater than about 11 $kJ/m^2$, even more preferably equal to or greater than about 15 $kJ/m^2$. and most preferably equal to or greater than about 18 $kJ/m^2$.

Rubber cross-linking is quantified by the light absorbance ratio (LAR). In the rubber-modified copolymer of the present invention, it is preferred that the rubber particles have a light absorbance ratio preferably equal to or greater than about 0.1, more preferably equal to or greater than about 0.2, and most preferably equal to or greater than about 0.3. The preferred light absorbance ratio of the dispersed phase is less than or equal to about 0.95, preferably less than or equal to about 0.85, more preferably less than or equal to about 0.8, and most preferably less than or equal to 0.75. Light absorbance ratio is the ratio of light absorbance for a suspension of the rubber particles in dimethylformamide to the light absorbance for a suspension of the rubber particles in dichloromethane, as described in the examples hereinbelow.

The light absorbance ratio, which is a measure for degree of crosslinking of the rubber component, is dependent on the amount and kind of the polymerization initiator and the temperature and the residence time at the removal step for the volatile components. It also depends on the types and amounts of the matrix monomers, antioxidant, chain transfer agent, etc. A suitable light absorbance ratio can be set by a person skilled in the art by choosing the appropriate conditions for the production process in accordance with the trial and error method.

The rubber-modified monovinylidene aromatic copolymer composition of the present invention can be employed

in mixtures, alloys or blends with other thermoplastic polymer and/or copolymer resins, for example, mixtures with polyolefins, such as homopolymers and/or copolymers of polyethylene, polypropylene; nylons; polysulfones; polyethers; polyether imides; polyphenylene oxides; polycarbonates; or polyesters. A preferred blend is polycarbonate and a mass ABS of the present invention (PC/ABS).

In addition, the claimed rubber-modified monovinylidene aromatic copolymer composition may also optionally contain one or more additives that are commonly used in compositions of this type. Preferred additives of this type include, but are not limited to: ignition resistant additives, stabilizers, colorants, antioxidants, antistats, impact modifiers (such as emulsion ABS, polyolefin elastomers, methylmethacrylate, butadiene, and styrene (MBS) terpolymers, acrylate rubbers, and the like), silicon oils, flow enhancers, mold releases, etc. Additionally, ignition resistance additives, such as, but not limited to halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used. Further, compounds which stabilize mass polymerized rubber-modified monovinylidene aromatic copolymer compositions against degradation caused by, but not limited to heat, light, and oxygen, or a mixture thereof may be used. Fillers and reinforcements may also be present. Preferred examples of fillers are talc, clay, wollastonite, mica, glass or a mixture thereof.

If used, such additives and/or fillers may be present in an amount from at least about 0.01 percent by weight, preferably at least about 0.1 percent by weight, more preferably at least about 1 percent by weight, more preferably at least about 2 percent by weight, and most preferably at least about 3 percent by weight based on the weight of the rubber-modified monovinylidene aromatic copolymer composition. Generally, the additive and/or filler is present in an amount less than or equal to about 40 percent by weight, preferably less than or equal to about 30 percent by weight, more preferably less than or equal to about 20 percent by weight, more preferably less than or equal to about 15 percent by weight, more preferably less than or equal to about 10 percent by weight and most preferably less than or equal to about 5 percent by weight based on the weight of the rubber-modified monovinylidene aromatic copolymer composition. Preferably, additives may be present in amounts up to 5 weight percent while fillers may be present in amounts up to 40 weight percent based on the weight of the rubber-modified monovinylidene aromatic copolymer.

The rubber-modified monovinylidene aromatic copolymer composition of this invention is thermoplastic. When softened or melted by the application of heat, the compositions of this invention can be formed or molded using conventional techniques such as (co)extrusion, calendering, laminating, vacuum forming, thermoforming, compression molding, gas assisted injection molding, injection molding and/or blow molding, alone or in combination, preferably (co)extrusion into profile, pipe, film, or sheet.

In one embodiment of the invention, to minimize costs, sheets are coextruded into an A-B structure where the A structure layer is the rubber-modified monovinylidene aromatic copolymer composition of this invention constituting, typically, 5 to 15 percent of the sheet thickness. The coextruded layer can either be coextruded using feedblock technology or multi-manifold technology. Depending on the application, the B layer may be standard ABS or any other thermoplastic polymer providing the desired properties for the specific end use application. In some cases, an A-B-A structure can be produced as well. A low gloss film (typically 100 to 200 microns) of the rubber-modified monovinylidene aromatic copolymer composition of this invention can also be laminated onto any compatible thermoplastic, preferably a standard ABS during the extrusion step.

By convention, material equal to or greater than 1 millimeter (mm) thick is called sheet or sheeting **40.** By convention, material less than 1mm thick is called film. Sheet has a quenched-side surface **42** and a hot-side surface **41**. The process to extrude sheet is well known. Briefly, the thermoplastic polymer is melt blended in an extruder **1** and extruded through a die designed for producing sheet **2**, typically a center-fed die. The die regulates the thickness of the melt emerging from the die. The extrudate or extruded continuous sheet **30** passes through quench rolls, sometimes referred to as the roll stack. The quench rolls **3, 4, 5,** or **6, 7,** and **8** are maintained at a precise temperature by means of circulating water or, in some cases where higher temperatures are required, oil.

If the extrudate or extruded continuous sheet **30** passes through the roll stack in an upwards direction, the roll stack is referred to as an "up-stack" **(FIG. 1),** if the extrudate or extruded sheet passes through the roll stack in a downward direction, the roll stack is referred to as a "down-stack" **(FIG. 2).** Other configurations of roll stacks are also within the scope of the present invention, for example, horizontal roll stacks and the like. Depending on the desired surface appearance of the extruded sheet, the surface of the rolls may be polished, smooth, or have a pattern thereon which is replicated onto the extruded sheet (sometimes referred to as embossing).

Embossing is typically on roll **4** for an up-stack configuration or on roll 7 for a down stack configuration. The roll stack temperatures will vary greatly from embossing type to embossing type. Typically, lower complexity embossing (for example fine grain) can be produced at low roll stack temperatures, typically 60°C to 100°C. Higher complexity embossing (for example leather grain) requires higher roll stack temperatures typically around 120°C, but even higher temperatures can be used (for example 165°C). The limiting factor at higher temperatures is the sticking of the melt onto the rolls. Actual measured temperature of the sheet between roll **3** and **4** (or roll 6 and 7) on side **31** can range between 150°C to 170°C even with a gloss roll temperature of 80°C.

For a roll stack used in an up-stack configuration for the production of smooth or glossy sheet, preferably the temperatures for the first or bottom roll **3** is from 60°C to 90°C. For a down-stack, preferably the temperature for the first or top roll **6** is from 60°C to 90°C. For an up-stack, preferably the temperature for the second or middle roll **4** is from 70°C to 100°C. For a down-stack, preferably the temperature for the second or middle roll **7** is from 70°C to 100°C. For an up-stack, preferably the temperature for the third or top roll **5** is from 80°C to 100°C. For a down-stack, preferably the temperature for the third or bottom roll **8** is from 80°C to 100°C.

In the up-stack configuration, the surface of the continuous extruded sheet **30** that does not contact the second/middle roll **4** is called the hot-side **31.** In the up-stack configuration, the surface of the continuous extruded sheet **30** that contacts the second/middle roll **4** is called the quenched-side **32**. In the down-stack configuration, the surface of the continuous extruded sheet **30** that does not contact the second/middle roll **7** is the hot-side **31**. In the down-stack configuration, the surface of the continuous extruded sheet **30** that contacts the second/middle roll **7** is the quenched-side **32**. The hot-side **31** of the continuous extruded sheet **30** in an up-stack configuration (**FIGS. 1** and **3**) becomes the bottom side **41** (but it is still the hot-side) of the cut extruded sheet **40.** However, the hot-side of the continuous extruded sheet **30** in a down-stack **(FIG. 2)** becomes the top side of the cut extruded sheet (but still the hot-side-not depicted in the FIGS.) Regardless of stack configuration, the surface of the continuous extruded sheet and the resulting cut extruded sheet that contacts the surface of the second/middle roll is defined as the quenched-side **32** and **42,** respectively. Regardless of stack configuration, the surface of the continuous extruded sheet and the resulting cut extruded sheet that does not contact the surface of the second/middle roll is defined as the hot-side **31** and **41,** respectively.

In addition to cooling the extrudate or continuous extruded sheet, the rolls, are usually chrome plated and polished to a high finish, this will to a large extent determine the surface gloss of the cut extruded sheet. For embossing, in most cases the middle roll is used to emboss patterns on the continuous extruded sheet **30.** Examples of embossed patterns are wood grain, leather grain, prism patterns, and the like.

On leaving the cooling rolls, the continuous extruded sheet travels to the pulling rolls **13, 14, 15** and **16;** during this time, it is usually supported by smaller cooling rolls **9, 10, 11,** and **12** and may also be cooled by fans or other means. From the pulling rolls **13, 14, 15** and **16** the continuous extruded sheet **30** may pass through an edge trimmer **17** and is usually automatically cut with a cutter **18** to form cut extruded sheet **40.** The cut extruded sheet **40** is conveyed on a conveyer belt **19** and stacked. The cut extruded sheet **40** has a hot-side **41** and a quenched-side **42.**

The process of the present invention may also utilize multilayered techniques where two or more layers are coextruded or laminated together. Preferred sheet are monolayer sheet or coextruded sheet having two, three, four, five, six, or more layers. Said sheet is preferably thermoformed or vacuum formed into fabricated articles. The rubber-modified monovinylidene aromatic copolymer composition of this invention can be calendered into films which can then be laminated onto a mono- or multi-layered sheet during a standard extrusion step.

Some of the fabricated articles include molded articles requiring a consistent low gloss surface such as an extruded sheet or film which may be converted by thermoforming or vacuum forming to such end products for transportation vehicles, for example such as interior automotive trim parts, parts for busses, parts for trucks, parts for vans, parts for recreational vehicles, parts for boats, and parts for planes; information technology equipment parts, such as enclosures for computers, computer peripherals, printers, copiers; diffuser components for TV and computer monitors; parts for furniture such as furniture foil, furniture edge bands, parts for appliances, and the like.

## EXAMPLES

To illustrate the practice of this invention, examples of preferred embodiments are set forth below. However, these examples do not in any manner restrict the scope of this invention.

The compositions of Examples 1 to 5 and Comparative Example A are mass produced acrylonitrile butadiene styrene terpolymer resins wherein 8.5 weight percent rubber is dissolved in 53.5 weight percent styrene, 16 weight percent acrylonitrile, and 22 weight percent ethylbenzene to form a reaction feed stream. The mixture is polymerized in continuous process while agitating said mixture. The polymerization occurred in a multi staged reactor system over an increasing temperature profile. During the polymerization process, some of the forming copolymer grafts to the rubber molecules while some of it does not graft, but instead, form the matrix copolymer.

A continuous polymerization apparatus composed of four plug flow reactors connected in series, wherein each plug flow reactor is divided in three zones of equal size, each zone having a separate temperature control and equipped with an agitator, is continuously charged in zone 1 with a feed of 17.8 kg/hr composed of a rubber component, styrene, acrylonitrile, and ethyl benzene, at such a rate that the total residence time in the apparatus is approximately 7 hours. 1,1-di(t-butyl peroxy) cyclohexane (TRIGONOX™ 22 initiator) is added to the feed line to the first reactor, n-dodecylmercaptan (nDM) (chain transfer agent) is added to different zones to optimize the rubber particle sizing and the matrix molecular weight. Table 1 contains further details with respect to feed composition and reaction conditions. After passing through the four reactors, the polymerization mixture is guided to a separation and monomer recovery step using a preheater followed by a devolatilizer. The molten resin is stranded and cut in granular pellets. The monomers and ethyl

benzene are recycled and fed to the polymerization apparatus.

Temperatures for (a) the four reactors are: reactor 1: (Zone 1, 105°C), (Zone 2, 108°C), and (Zone 3, 111°C); reactor 2: (Zone 4, 115°C), (Zone 5, 120°C), and (Zone 6 125°C); reactor 3: (Zone 7, 131 °C), (Zone 8, 137°C), and (Zone 9, 143°C), and reactor 4: (Zone 10, 151°C), (Zone 11, 159°C), and (Zone 12, 167°C). Agitation is set for each of the reactors at 100, 100, 50, and 10 revolutions per minute (RPM) for reactors 1 to 4, respectively. Samples are tested at the end of each reactor to determine percent conversion and are expressed as percent solids based on the weight of the reaction mixture.

The pellets are used to prepare physical property test specimens on a Toyo 90 ton injection molding machine having the following molding conditions: Melt temperature of 260□C; Mold temperature of 77□C; Holding pressure of 9000 pounds per square inch (psi); Injection time of 1.63 seconds; Hold time of 30 seconds; Cooling time of 60 seconds; and Cycle time of 60 seconds.

The process conditions for Examples 1 to 5 and Comparative Example A are given in Table 1 below. In Table 1, weight percents are based on the weight of the rubber-modified monovinylidene aromatic copolymer composition. In Table 1:

"B" is a commercially available mass ABS comprising about 13.9 weight percent polybutadiene and 20.8 weight percent acrylonitrile available as LUSTRAN™ 112LG from Ineos ABS;
"C" is a commercially available mass ABS comprising about 11.4 weight percent polybutadiene and 22.7 weight percent acrylonitrile available as SINKRAL™ D232 from Polimeri Europa;
"D" is a commercially available mass ABS comprising about 12.5 weight percent polybutadiene and 21.5 weight percent acrylonitrile available as MAGNUM™ 3504 Resin from The Dow Chemical Company;
"TRIGONOX 22" is 1,1-di(t-butyl peroxy) cyclohexane available from Ciba Specialty Chemicals;
"nDM" is n-dodecylmercaptan a chain transfer agent; and
"PB" is a low-cis polybutadiene with 57 Mooney viscosity available as Dow BSL PB5901.

The compositions and product performance for Examples 1 to 5 and Comparative Examples A to D are given in Table 2 below. In Table 2:

"$PBD_{für}$," is the polybutadiene content in the rubber-modified monovinylidene aromatic copolymer composition which is measured by Fourier Transform infrared spectroscopy and reported in weight percent bases on the weight of the rubber-modified monovinylidene aromatic copolymer composition;
"$AN_{für}$" is the acrylonitrile content in the rubber-modified monovinylidene aromatic copolymer composition which is measured by Fourier Transform infrared spectroscopy and reported in weight percent bases on the weight of the rubber-modified monovinylidene aromatic copolymer composition;
"$RPS_{LS230}$" is the rubber particle size determined by a light scattering method using a Beckman Coulter Particle Characterization LS-230 instrument and LS230 Beckman Particle Characterization software, version 3.01: wherein 6-8 granules of polymer sample is dissolved in approximately 10 ml DMF and sonicated for a minimum of 15 minutes. The following optical model parameter values are used: Fluid refractive index (ηfluid) - 1.431, Sample "real" refractive index (ηsample/real) - 1.570, and Sample "imaginary" refractive index (ηsample/imaginary) - 0.01. Drops of dissolved sample are added until sample obscuration is in the 45.0 to 55.0 percent range. The mean volume average particle size is reported;
"$M_{n\ Matrix}$" is the number average molecular weight for the matrix copolymer measured by gel permeation chromatography using narrow molecular weight polystyrene standards, determinations are made with a UV RI detector;
"$M_{w\ Matrix}$" is the weight average molecular weight for the matrix copolymer measured by gel permeation chromatography using narrow molecular weight polystyrene standards, determinations and a refractive index (RI) detector;
"LAR" is the light absorbance ratio determined using a Brinkmann model PC 800 probe colorimeter equipped with a 450 nm wavelength filter, from Brinkmann Instruments Inc., Westbury, New York, or equivalent, is used. In a first vial, a 0.4 gram (g) sample of rubber-modified copolymer is dissolved in 40 milliliters (ml) of dimethylformamide (DMF). From the first vial, 5 ml of the resulting DMF solution is added to a second vial containing 40 ml of DMF. From the first vial, 5 ml of the resulting DMF solution is added to a third vial containing 20 ml of dichloromethane (DCM). The probe is zeroed in neat DMF. The absorption of the DMF solution in the second vial and the absorption of the DCM solution in the third vial are determined. The light absorbance ratio is calculated by the following equation:

$$LAR = \frac{(\text{Absorbance of Sample in DMF})}{(\text{Absorbance of Sample in DCM})}$$

To determine the gloss characteristics after extrusion, a sheet is extruded with a Banbury extruder. After drying

at 80°C for one hour the granules are fed to the extruder. The melt temperature is increased from 180°C to 225°C at the die. The hot extrudate is cast onto the middle roll of a down-stack configuration. The middle roll temperature is kept at 80°C, the upper roll is 85°C, and the lower roll is 75°C.

The top side is called the "hot side" and the under-side is called the "quenched side". The "$Gloss_{hot\text{-}side}$" and "$Gloss_{q\text{-}side}$" are measured after 24 hours of acclimatizing to room temperature using a white background for measuring the gloss.

"$Gloss_{hot\text{-}side}$ @ T°C" is measured on a sheet that is heated to a specific temperature. The temperature is measured with an IR-camera. The temperature of the sheet is increased by a 300 Watt ceramic heating waver mounted above the sheet, radiating perpendicular onto the sheet. The radiation time is 2 minutes and the power to the ceramic heater is adjusted to maintain the sheet temperature at the desired temperature.

"$Gloss_{hot\text{-}side}$" is determined by 60° Gardner gloss on the smooth "hot side" of extruded sheet according to ISO 2813:1994/Cor.1:1997(E) with a BYK-Gardner gloss-meter (model micro-TRI-gloss), values are reported as gloss units (GU);

"$Gloss_{q\text{-}side}$" is determined by 60° Gardner gloss on the smooth "quenched side" of the extruded sheet according to ISO 2813:1994/Cor.1:1997(E) with a BYK-Gardner gloss-meter (model micro-TRI-gloss), values are reported as gloss units;

"$Gloss_{hot\text{-}side}$ @ T°C" is the gloss determined by 60° Gardner gloss on the "hot side" of extruded sheet according to ISO 2813:1994/Cor.1:1997(E) with a BYK-Gardner gloss-meter (model micro-TRI-gloss) after the sheet is warmed to temperature T°C then cooled to room temperature, values are reported as gloss units;

"Tensile Yield Strength", "Tensile Elongation at Break" and "Tensile Modulus" are performed in accordance with ISO 527-2. Tensile Type 1 test specimens are conditioned at 23°C and 50 percent relative humidity 24 hours prior to testing. Testing is performed at 23°C using a Zwick 1455 mechanical tester;

"MFR @ 220°C and 10 kg" melt flow rate is determined according to ISO 1133 on a Zwick 4105 01/03 plastometer at 220°C and an applied load of 10 kg, samples are conditioned at 80°C for 2 hours prior to testing; and

"Notched $Charpy_{23°C}$" impact resistance is determined according to ISO 179-1/1eA at 23°C.

Table 1

| PROCESS CONDITIONS | 1 | 2 | 3 | 4 | 5 | A |
|---|---|---|---|---|---|---|
| Reaction Feed Stream Rate, kg/h | 17.8 | 17.8 | 17.8 | 17.8 | 17.8 | 17.8 |
| TRIGONOX 22, ppm | 137 | 137 | 137 | 137 | 137 | 137 |
| nDM, ppm | | | | | | |
| Zone 1 | 450 | 450 | 250 | 450 | 250 | 250 |
| Zone 2 | 10 | 10 | 10 | 10 | 10 | 10 |
| Zone 3 | 300 | 21 | 300 | 21 | 300 | 758 |
| IRGANOX 1076, ppm | | | | | | |
| Zone 8 | 1342 | 1342 | 1342 | 1342 | 1342 | 1342 |
| Total Recycle, g/h | | | | | | |
| Zone 4 | 1500 | 1500 | 1500 | 1500 | 1500 | 1500 |
| Zone 7 | 1500 | 1500 | 1500 | 1500 | 1500 | 1500 |
| Zone 10 | 1500 | 1500 | 1500 | 1500 | 1500 | 1500 |
| Solids, wt % | | | | | | |
| R1 | 17 | 17 | 17 | 17 | 18 | 18 |
| R2 | 36 | 37 | 35 | 36 | 36 | 36 |

Table 2

| PRODUCT COMPOSITON | 1 | 2 | 3 | 4 | 5 | A | B | C | D |
|---|---|---|---|---|---|---|---|---|---|
| $PBD_{für}$, wt % | 12.7 | 12.9 | 12.9 | 13.0 | 12.7 | 13.5 | 13.9 | 11.4 | 12.5 |
| $AN_{für}$, wt % | 21.3 | 22.2 | 21.4 | 20.8 | 2.3 | 21.6 | | | 21.5 |

(continued)

| PRODUCT COMPOSITON | 1 | 2 | 3 | 4 | 5 | A | B | C | D |
|---|---|---|---|---|---|---|---|---|---|
| PRODUCT CHARACTERIZATION | | | | | | | | | |
| RPS $_{LS230}$, microns | 17.4 | 18.6 | 6.7 | 17.7 | 6.4 | 6.7 | 13 | 13 | 1.9 |
| $M_{n\ Matrix}$, kg/mole | 60 | 67 | 66 | 68 | 67 | 56 | 58 | 62 | 85 |
| Mw $_{Matrix}$, kg/mole | 138 | 158 | 160 | 154 | 161 | 141 | 148 | 128 | 175 |
| LAR, index | 0.44 | 0.54 | 0.45 | 0.71 | 0.62 | 0.45 | 0.78 | 0.71 | 0.45 |
| $Gloss_{hot-side}$, GU | 3.7 | 5.1 | 3.8 | 3.5 | 4.1 | 4.9 | 4.9 | 5.9 | 39.6 |
| $Gloss_{q-side}$, GU | 9.7 | 9.3 | 6.4 | 9.4 | 6.8 | 10.0 | 5.2 | 7.4 | 57.6 |
| $Gloss_{hot-side\ @\ 130°C}$, GU | 3.4 | 4.1 | 3.6 | 3.2 | 3.8 | 4.4 | 4.6 | 5.2 | |
| $Gloss_{hot-side\ @\ 140°C}$, GU | 3.4 | 3.6 | 3.7 | 3.1 | 3.9 | 4.6 | 4.6 | 5.3 | |
| $Gloss_{hot-side\ @\ 150°C}$, GU | 3.2 | 3.2 | 3.7 | 3.0 | 4.0 | 4.8 | 4.7 | 5.4 | |
| MFR, 220°C @ 10 kg, g/10 min. | 5.9 | 3.5 | 4.2 | 3.9 | 3.7 | 6.6 | 6.0 | 8.0 | 5.2 |
| Tensile Modulus, MPa | 1600 | 1700 | 1663 | 1545 | 1572 | 1570 | 1500 | 1500 | 2140 |
| Tensile Yield Strength, MPa | 30 | 32 | 32 | 29 | 31 | 31 | 26 | 27 | 43 |
| Tensile Elongation at Break, % | 123 | 129 | 126 | 123 | 129 | 132 | >15 | 100 | |
| Notched Charpy @ 23°C, kJ/$m^2$ | 18 | 22 | 25 | 20 | 21 | 19 | 9 | 9 | 23 |

**Claims**

**1.** A mass polymerized rubber-modified monovinylidene aromatic copolymer composition comprising:

(i) a continuous matrix phase comprising a copolymer of a monovinylidene aromatic monomer and 15 to 50 weight percent, based on the total weight of the matrix copolymer, of an ethylenically unsaturated nitrile monomer, and
(ii) a rubber component dispersed as discrete particles in the matrix wherein the rubber particles have an average rubber particle size (RPS in microns) equal to or greater than 5 microns as determined by light scattering LS230 and the matrix has a weight average molecular weight (Mw in kg/mole) represented by the following formula:

$$Mw \geq 155 - 10^{-6} . RPS^6.$$

**2.** The mass polymerized rubber-modified monovinylidene aromatic copolymer composition of Claim I wherein the monovinylidene aromatic monomer is styrene and the ethylenically unsaturated nitrile monomer is acrylonitrile.

**3.** The mass polymerized rubber-modified monovinylidene aromatic copolymer composition of Claim I further comprising a comonomer selected from n-butyl acrylate and/or N- phenyl maleimide.

**4.** The mass polymerized rubber-modified monovinylidene aromatic copolymer composition of Claim 1 wherein:

(i) the copolymer is present in an amount from about 60 to 90.5 weight percent and
(ii) the rubber component is present in an amount from about 40 to 9.5 weight percent, wherein weight percents are based on the total weight of the rubber-modified monovinylidene aromatic copolymer.

**5.** The mass polymerized rubber-modified monovinylidene aromatic copolymer composition of Claim 1 wherein the rubber component comprises a 1,3-butadiene homopolymer.

**6.** The mass polymerized rubber-modified monovinylidene aromatic copolymer composition of Claim 1 wherein the rubber component comprises a styrene and 1,3-butadiene block copolymer rubber.

**7.** The mass polymerized rubber-modified monovinylidene aromatic copolymer composition of Claim 1 further comprising a polycarbonate resin.

**8.** The mass polymerized rubber-modified monovinylidene aromatic copolymer composition of Claim 7 is a PC/ ABS blend.

**9.** A method for preparing a mass polymerized rubber-modified monovinylidene aromatic copolymer composition comprising the steps of:

(a) polymerizing by bulk, mass-solution, or mass polymerization techniques in the presence of a dissolved rubber component a monovinylidene aromatic monomer and an ethylenically unsaturated nitrile monomer, optionally in the presence of an inert solvent, forming a mixture containing a continuous matrix copolymer phase, the matrix copolymer including 15 to 50 weight percent of units, based on the total weight of the matrix copolymer, derived from the ethylenically unsaturated nitrile monomer, and wherein the rubber component is dispersed therein as discrete rubber particles,
(b) subjecting the resultant mixture to conditions sufficient to remove any unreacted monomers and to cross-link the rubber, and
(c) isolating the rubber-modified monovinylidene aromatic copolymer composition wherein the rubber particles have an average rubber particle size (RPS in microns) equal to or greater than 5 microns as determined by light scattering LS230 and the matrix has a weight average molecular weight (Mw in kg/mole) represented by the following formula:

$$Mw \geq 155 - 10^{-6} . RPS^6.$$

**10.** The method of Claim 9 wherein the monovinylidene aromatic monomer is styrene and the ethylenically unsaturated nitrile monomer is acrylonitrile.

**11.** A method for producing a (co)extruded sheet, pipe, film, or profile of a mass polymerized rubber-modified monovinylidene aromatic copolymer composition comprising the steps of:

(A) preparing a mass polymerized rubber-modified monovinylidene aromatic copolymer composition by:

(a) polymerizing by bulk, mass-solution, or mass polymerization techniques in the presence of a dissolved rubber component a monovinylidene aromatic monomer and an ethylenically unsaturated nitrile monomer, optionally in the presence of an inert solvent, forming a mixture containing a continuous matrix copolymer phase, the matrix copolymer including 15 to 50 weight percent of units, based on the total weight of the matrix copolymer, derived from the ethylenically unsaturated nitrile monomer, and wherein the rubber component is dispersed therein as discrete rubber particles,
(b) subjecting the resultant mixture to conditions sufficient to remove any unreacted monomers and to cross-link the rubber, and
(c) isolating the rubber-modified monovinylidene aromatic copolymer composition wherein the rubber particles have an average rubber particle size (RPS) equal to or greater than 5 microns as determined by light scattering LS23O and the matrix has a weight average molecular weight (Mw) represented by the following formula:

$$Mw \geq 155 - 10^{-6} . RPS^6$$

and

(B) (co)extruding said rubber-modified monovinylidene aromatic copolymer composition into an (co)extruded sheet, pipe, film, or profile.

**12.** A method for producing a thermoformed or vacuum formed fabricated article from a (co)extruded sheet or film of a mass polymerized rubber-modified monovinylidene aromatic copolymer composition comprising the steps of:

(A) preparing a mass polymerized rubber-modified monovinylidene aromatic copolymer composition by:

(a) polymerizing by bulk, mass-solution, or mass polymerization techniques in the presence of a dissolved rubber component a monovinylidene aromatic monomer and an ethylenically unsaturated nitrile monomer, optionally in the presence of an inert solvent, forming a mixture containing a continuous matrix copolymer phase, the matrix copolymer including 15 to 50 weight percent of units, based on the total weight of the matrix copolymer, derived from the ethylenically unsaturated nitrile monomer, and wherein the rubber component is dispersed therein as discrete rubber particles,
(b) subjecting the resultant mixture to conditions sufficient to remove any unreacted monomers and to crosslink the rubber, and
(c) isolating the rubber-modified monovinylidene aromatic copolymer composition wherein the rubber particles have an average rubber particle size (RPS) equal to or greater than 5 microns as determined by light scattering LS230 and the matrix has a weight average molecular weight (Mw) represented by the following formula:

$$Mw \geq 155 - 10^{-6} . RPS^{6}$$

(B) (co)extruding said rubber-modified monovinylidene aromatic copolymer composition into an (co)extruded sheet or film, and
(C) thermoforming or vacuum forming the (co)extruded sheet or film into a fabricated article.

**13.** A method for producing a laminated sheet, film or profile of a mass polymerized rubber-modified monovinylidene aromatic copolymer composition comprising the steps of:

(A) preparing a mass polymerized rubber-modified monovinylidene aromatic copolymer composition by:

(a) polymerizing by bulk, mass-solution, or mass polymerization techniques in the presence of a dissolved rubber component a monovinylidene aromatic monomer and an ethylenically unsaturated nitrile monomer, optionally in the presence of an inert solvent, forming a mixture containing a continuous matrix copolymer phase, the matrix copolymer including 15 to 50 weight percent of units, based on the total weight of the matrix copolymer, derived from the ethylenically unsaturated nitrile monomer, and wherein the rubber component is dispersed therein as discrete rubber particles,
(b) subjecting the resultant mixture to conditions sufficient to remove any unreacted monomers and to crosslink the rubber, and
(c) isolating the rubber-modified monovinylidene aromatic copolymer composition wherein the rubber particles have an average rubber particle size (RPS in microns) equal to or greater than 5 microns as determined by light scattering LS230 and the matrix has a weight average molecular weight (Mw in kg/mole) represented by the following formula:

$$Mw \geq 155 - 10^{-6} . RPS^{6}$$

(B) calendering said rubber-modified monovinylidene aromatic copolymer composition into a film, and
(C) laminating the film onto an (co)extruded thermoplastic sheet, film, or profile to form a laminated sheet, film or profile.

**14.** The method of Claim 13 further comprising the step of:

(D) thermoforming or vacuum forming the laminated sheet or film into a fabricated article.

**15.** The method of Claim 12 or 14 wherein the thermoformed or vacuum formed article is a building and construction part, an automotive part, a boat part, a plane part, a truck part, a van part, a bus part, a recreational vehicle part, an information technology equipment part, a furniture part, a diffuser board, or an appliance part.

**16.** The composition of Claim 1 in the form of a (co)extruded sheet, film, pipe, or profile.

**17.** The composition of Claim 1 in the form of thermoformed or vacuum formed article.

**18.** The article of Claim 17 is a building and construction part, an automotive part, a boat part, a plane part, a truck part, a van part, a bus part, a recreational vehicle part, an information technology equipment part, a furniture part, a diffuser board, or an appliance part.

**Patentansprüche**

**1.** Massepolymerisierte kautschukmodifizierte aromatische Monovinyliden-Copolymerzusammensetzung, umfassend:

(i) eine kontinuierliche Matrixphase, umfassend ein Copolymer eines aromatischen Monovinylidenmonomers und 15 bis 50 Gewichtsprozent, bezogen auf das Gesamtgewicht des Matrixcopolymers, eines ethylenisch ungesättigten Nitrilmonomers, und
(ii) eine in der Matrix als diskrete Partikeln dispergierte Kautschukkomponente, wobei die Kautschukpartikeln eine durchschnittliche Kautschukpartikelgröße (RPS in Mikrometern) von gleich oder größer als 5 Mikrometer haben, wie durch Lichtstreuung LS230 bestimmt, und wobei die Matrix ein gewichtsmittleres Molekulargewicht (Mw in kg/Mol) gemäß der folgenden Formel hat:

$$Mw \geq 155 - 10^{-6} \cdot RPS^{6}.$$

**2.** Massepolymerisierte kautschukmodifizierte aromatische Monovinyliden-Copolymerzusammensetzung gemäß Anspruch 1, wobei das aromatische Monovinylidenmonomer Styrol ist und das ethylenisch ungesättigte Nitrilmonomer Acrylnitril ist.

**3.** Massepolymerisierte kautschukmodifizierte aromatische Monovinyliden-Copolymerzusammensetzung gemäß Anspruch 1, weiter umfassend ein Comonomer, das aus n-Butylacrylat und/oder N-Phenylmaleimid ausgewählt ist.

**4.** Massepolymerisierte kautschukmodifizierte aromatische Monovinyliden-Copolymerzusammensetzung gemäß Anspruch 1, wobei:

(i) das Copolymer in einer Menge von etwa 60 bis 90,5 Gewichtsprozent vorliegt, und
(ii) die Kautschukkomponente in einer Menge von etwa 40 bis 9,5 Gewichtsprozent vorliegt, wobei Gewichtsprozente auf das Gesamtgewicht des kautschukmodifizierten aromatischen Monovinyliden-Copolymers bezogen sind.

**5.** Massepolymerisierte kautschukmodifizierte aromatische Monovinyliden-Copolymerzusammensetzung gemäß Anspruch 1, wobei die Kautschukkomponente ein 1,3-Butadien-Homopolymer umfasst.

**6.** Massepolymerisierte kautschukmodifizierte aromatische Monovinyliden-Copolymerzusammensetzung gemäß Anspruch 1, wobei die Kautschukkomponente einen Styrol- und 1,3-Butadien-Blockcopolymer-Kautschuk umfasst.

**7.** Massepolymerisierte kautschukmodifizierte aromatische Monovinyliden-Copolymerzusammensetzung gemäß Anspruch 1, weiter umfassend ein Polycarbonatharz.

**8.** Massepolymerisierte kautschukmodifizierte aromatische Monovinyliden-Copolymerzusammensetzung gemäß Anspruch 7 ist eine PC/ABS-Mischung.

**9.** Verfahren zur Herstellung einer massepolymerisierten kautschukmodifizierten aromatischen Monovinyliden-Copolymerzusammensetzung, das die folgenden Schritte umfasst:

(a) Polymerisieren mittels Bulk-, Masselösungs- oder Massepolymerisationstechniken in Gegenwart einer gelösten Kautschukkomponente eines aromatischen Monovinylidenmonomers und eines ethylenisch ungesättigten Nitrilmonomers, wahlweise in Gegenwart eines inerten Lösungsmittels, unter Bildung eines Gemischs, das eine kontinuierliche Matrixcopolymerphase enthält, wobei das Matrixcopolymer 15 bis 50 Gewichtsprozent,

bezogen auf das Gesamtgewicht des Matrixcopolymers, Einheiten beinhaltet, die von dem ethylenisch ungesättigten Nitrilmonomer abgeleitet sind, und wobei die Kautschukkomponente darin als diskrete Kautschukpartikeln dispergiert ist,

(b) Unterziehen des resultierenden Gemischs Bedingungen, die ausreichen, um nicht reagierte Monomere zu entfernen und den Kautschuk zu vernetzen, und

(c) Isolieren der kautschukmodifizierten aromatischen Monovinyliden-Copolymerzusammensetzung, wobei die Kautschukpartikeln eine durchschnittliche Kautschukpartikelgröße (RPS in Mikrometern) von gleich oder größer als 5 Mikrometer haben, wie durch Lichtstreuung LS230 bestimmt, und wobei die Matrix ein gewichtsmittleres Molekulargewicht (Mw in kg/Mol) gemäß der folgenden Formel hat:

$$Mw \geq 155 - 10^{-6} \cdot RPS^{6}.$$

**10.** Verfahren gemäß Anspruch 9, wobei das aromatische Monovinylidenmonomer Styrol ist und das ethylenisch ungesättigte Nitrilmonomer Acrylnitril ist.

**11.** Verfahren zur Herstellung einer bzw. eines (co)extrudierten Platte, Rohrs, Folie oder Profils einer massepolymerisierten kautschukmodifizierten aromatischen Monovinyliden-Copolymerzusammensetzung, das die folgenden Schritte umfasst:

(A) Herstellen einer massepolymerisierten kautschukmodifizierten aromatischen Monovinyliden-Copolymerzusammensetzung durch:

(a) Polymerisieren mittels Bulk-, Masselösungs- oder Massepolymerisationstechniken in Gegenwart einer gelösten Kautschukkomponente eines aromatischen Monovinylidenmonomers und eines ethylenisch ungesättigten Nitrilmonomers, wahlweise in Gegenwart eines inerten Lösungsmittels, unter Bildung eines Gemischs, das eine kontinuierliche Matrixcopolymerphase enthält, wobei das Matrixcopolymer 15 bis 50 Gewichtsprozent, bezogen auf das Gesamtgewicht des Matrixcopolymers, Einheiten beinhaltet, die von dem ethylenisch ungesättigten Nitrilmonomer abgeleitet sind, und wobei die Kautschukkomponente darin als diskrete Kautschukpartikeln dispergiert ist,

(b) Unterziehen des resultierenden Gemischs Bedingungen, die ausreichen, um nicht reagierte Monomere zu entfernen und den Kautschuk zu vernetzen, und

(c) Isolieren der kautschukmodifizierten aromatischen Monovinyliden-Copolymerzusammensetzung, wobei die Kautschukpartikeln eine durchschnittliche Kautschukpartikelgröße (RPS) von gleich oder größer als 5 Mikrometer haben, wie durch Lichtstreuung LS23O bestimmt, und wobei die Matrix ein gewichtsmittleres Molekulargewicht (Mw) gemäß der folgenden Formel hat:

$$Mw \geq 155 - 10^{-6} \cdot RPS^{6}.$$

und

(B) (Co)extrudieren der kautschukmodifizierten aromatischen Monovinyliden-Copolymerzusammensetzung zu einer bzw. einem (co)extrudierten Platte, Rohr, Folie oder Profil.

**12.** Verfahren zur Herstellung eines thermogeformten oder vakuumgeformten Fertigartikels aus einer (co)extrudierten Platte oder Folie einer massepolymerisierten kautschukmodifizierten aromatischen Monovinyliden-Copolymerzusammensetzung, das die folgenden Schritte umfasst:

(A) Herstellen einer massepolymerisierten kautschukmodifizierten aromatischen Monovinyliden-Copolymerzusammensetzung durch:

(a) Polymerisieren mittels Bulk-, Masselösungs- oder Massepolymerisationstechniken in Gegenwart einer gelösten Kautschukkomponente eines aromatischen Monovinylidenmonomers und eines ethylenisch ungesättigten Nitrilmonomers, wahlweise in Gegenwart eines inerten Lösungsmittels, unter Bildung eines Gemischs, das eine kontinuierliche Matrixcopolymerphase enthält, wobei das Matrixcopolymer 15 bis 50 Gewichtsprozent, bezogen auf das Gesamtgewicht des Matrixcopolymers, Einheiten beinhaltet, die von

dem ethylenisch ungesättigten Nitrilmonomer abgeleitet sind, und wobei die Kautschukkomponente darin als diskrete Kautschukpartikeln dispergiert ist,
(b) Unterziehen des resultierenden Gemischs Bedingungen, die ausreichen, um nicht reagierte Monomere zu entfernen und den Kautschuk zu vernetzen, und
(c) Isolieren der kautschukmodifizierten aromatischen Monovinyliden-Copolymerzusammensetzung, wobei die Kautschukpartikeln eine durchschnittliche Kautschukpartikelgröße (RPS) von gleich oder größer als 5 Mikrometer haben, wie durch Lichtstreuung LS230 bestimmt, und wobei die Matrix ein gewichtsmittleres Molekulargewicht (Mw) gemäß der folgenden Formel hat:

$$Mw \geq 155 - 10^{-6} \cdot RPS^{6}.$$

und

(B) (Co)extrudieren der kautschukmodifizierten aromatischen Monovinyliden-Copolymerzusammensetzung zu einer (co)extrudierten Platte oder Folie und
(C) Thermoformen oder Vakuumformen der (co)extrudierten Platte oder Folie zu einem Fertigartikel.

**13.** Verfahren zur Herstellung einer bzw. eines laminierten Platte, Folie oder Profils einer massepolymerisierten kautschukmodifizierten aromatischen Monovinyliden-Copolymerzusammensetzung, das die folgenden Schritte umfasst:

(A) Herstellen einer massepolymerisierten kautschukmodifizierten aromatischen Monovinyliden-Copolymerzusammensetzung durch:

(a) Polymerisieren mittels Bulk-, Masselösungs- oder Massepolymerisationstechniken in Gegenwart einer gelösten Kautschukkomponente eines aromatischen Monovinylidenmonomers und eines ethylenisch ungesättigten Nitrilmonomers, wahlweise in Gegenwart eines inerten Lösungsmittels, unter Bildung eines Gemischs, das eine kontinuierliche Matrixcopolymerphase enthält, wobei das Matrixcopolymer 15 bis 50 Gewichtsprozent, bezogen auf das Gesamtgewicht des Matrixcopolymers, Einheiten beinhaltet, die von dem ethylenisch ungesättigten Nitrilmonomer abgeleitet sind, und wobei die Kautschukkomponente darin als diskrete Kautschukpartikeln dispergiert ist,
(b) Unterziehen des resultierenden Gemischs Bedingungen, die ausreichen, um nicht reagierte Monomere zu entfernen und den Kautschuk zu vernetzen, und
(c) Isolieren der kautschukmodifizierten aromatischen Monovinyliden-Copolymerzusammensetzung, wobei die Kautschukpartikeln eine durchschnittliche Kautschukpartikelgröße (RPS in Mikrometer) von gleich oder größer als 5 Mikrometer haben, wie durch Lichtstreuung LS230 bestimmt, und wobei die Matrix ein gewichtsmittleres Molekulargewicht (Mw in kg/Mol) gemäß der folgenden Formel hat:

$$Mw \geq 155 - 10^{-6} \cdot RPS^{6}.$$

(B) Kalandrieren der kautschukmodifizierten aromatischen Monovinyliden-Copolymerzusammensetzung zu einer Folie, und
(C) Laminieren der Folie auf eine (co)extrudierte thermoplastische Platte, Folie oder ein (co)extrudiertes thermoplastisches Profil zur Bildung einer bzw. eines laminierten Platte, Folie oder Profils.

**14.** Verfahren gemäß Anspruch 13, weiter umfassend den folgenden Schritt:

(D) Thermoformen oder Vakuumformen der laminierten Platte oder Folie zu einem Fertigartikel.

**15.** Verfahren gemäß Anspruch 12 oder 14, wobei der thermogeformte oder vakuumgeformte Artikel ein Bau- und Konstruktionsteil, ein Automobilteil, ein Bootsteil, ein Flugzeugteil, ein Lkw-Teil, ein Lieferwagenteil, ein Busteil, ein Teil eines Freizeitfahrzeugs, ein Teil einer Informationstechnologieausrüstung, ein Möbelteil, eine Diffusorplatte oder ein Geräteteil ist.

**16.** Zusammensetzung gemäß Anspruch 1 in der Form einer bzw. eines (co)extrudierten Platte, Folie, Rohrs oder Profils.

17. Zusammensetzung gemäß Anspruch 1 in der Form eines thermogeformten oder vakuumgeformten Artikels.

18. Artikel gemäß Anspruch 17 ist ein Bau- und Konstruktionsteil, ein Automobilteil, ein Bootsteil, ein Flugzeugteil, ein Lkw-Teil, ein Lieferwagenteil, ein Busteil, ein Teil eines Freizeitfahrzeugs, ein Teil einer Informationstechnologieausrüstung, ein Möbelteil, eine Diffusorplatte oder ein Geräteteil.

**Revendications**

1. Composition de copolymère aromatique de monovinylidène modifié par un caoutchouc et polymérisé en masse, comprenant :

(i) une phase matricielle continue comprenant un copolymère d'un monomère aromatique de monovinylidène et 15 à 50 pour cent en poids, sur la base du poids total du copolymère matriciel, d'un monomère de nitrile à insaturation éthylénique, et
(ii) un composant de caoutchouc dispersé sous la forme de particules discrètes dans la matrice dans laquelle les particules de caoutchouc ont une taille moyenne de particule de caoutchouc (RPS en micron) supérieure ou égale à 5 microns telle que déterminée par diffusion de la lumière par LS230 et la matrice a un poids moléculaire moyen en poids (Mw en kg/mole) représenté par la formule suivante :

$$Mw \geq 155 - 10^{-6}.RPS^{6}.$$

2. Composition de copolymère aromatique de monovinylidène modifié par un caoutchouc et polymérisé en masse selon la revendication 1 dans laquelle le monomère aromatique de monovinylidène est le styrène et le monomère de nitrile à insaturation éthylénique est l'acrylonitrile.

3. Composition de copolymère aromatique de monovinylidène modifié par un caoutchouc et polymérisé en masse selon la revendication 1 comprenant en outre un comonomère choisi parmi l'acrylate de n-butyle et/ou le N-phénylmaléimide.

4. Composition de copolymère aromatique de monovinylidène modifié par un caoutchouc et polymérisé en masse selon la revendication 1 dans laquelle :

(i) le copolymère est présent en une quantité d'environ 60 et 90,5 pour cent en poids et
(ii) le composant de caoutchouc est présent en une quantité d'environ 40 et 9,5 pour cent en poids, dans laquelle les pourcentages en poids sont basés sur le poids total du copolymère aromatique de monovinylidène modifié par un caoutchouc.

5. Composition de copolymère aromatique de monovinylidène modifié par un caoutchouc et polymérisé en masse selon la revendication 1 dans laquelle le composant de caoutchouc comprend un homopolymère de buta-1,3-diène.

6. Composition de copolymère aromatique de monovinylidène modifié par un caoutchouc et polymérisé en masse selon la revendication 1 dans laquelle le composant de caoutchouc comprend un caoutchouc de type copolymère séquencé de styrène et de buta-1,3-diène.

7. Composition de copolymère aromatique de monovinylidène modifié par un caoutchouc et polymérisé en masse selon la revendication 1 comprenant en outre une résine de polycarbonate.

8. Composition de copolymère aromatique de monovinylidène modifié par un caoutchouc et polymérisé en masse selon la revendication 7 qui est un mélange de PC/ABS.

9. Procédé de préparation d'une composition de copolymère aromatique de monovinylidène modifié par un caoutchouc et polymérisé en masse, comprenant les étapes suivantes :

(a) la polymérisation selon les techniques de la polymérisation en masse ou en masse/solution en présence d'un composant de caoutchouc dissous, d'un monomère aromatique de monovinylidène et d'un monomère de

nitrile à insaturation éthylénique, facultativement en présence d'un solvant inerte, de manière à former un mélange contenant une phase continue de copolymère matriciel, le copolymère matriciel comprenant 15 à 50 pour cent en poids de motifs, sur la base du poids total du copolymère matriciel, dérivés du monomère de nitrile à insaturation éthylénique, et dans lequel le composant de caoutchouc est dispersé dedans sous la forme de particules de caoutchouc discrètes,
(b) la soumission du mélange résultant à des conditions suffisantes pour éliminer les monomères n'ayant pas réagi et pour réticuler le caoutchouc, et
(c) l'isolement de la composition de copolymère aromatique de monovinylidène modifié par un caoutchouc dans laquelle les particules de caoutchouc ont une taille moyenne de particule de caoutchouc (RPS en micron) supérieure ou égale à 5 microns telle que déterminée par diffusion de la lumière par LS230 et la matrice a un poids moléculaire moyen en poids (Mw en kg/mole) représenté par la formule suivante :

$$Mw \geq 155 - 10^{-6}.RPS^{6}.$$

**10.** Procédé selon la revendication 9 dans lequel le monomère aromatique de monovinylidène est le styrène et le monomère de nitrile à insaturation éthylénique est l'acrylonitrile.

**11.** Procédé de production d'une feuille, d'un tube, d'un film ou d'un profilé (co)extrudé(e) composé(e) d'une composition de copolymère aromatique de monovinylidène modifié par un caoutchouc et polymérisé en masse, comprenant les étapes suivantes :

(A) la préparation d'une composition de copolymère aromatique de monovinylidène modifié par un caoutchouc et polymérisé en masse par :

(a) la polymérisation selon les techniques de la polymérisation en masse ou en masse/solution en présence d'un composant de caoutchouc dissous, d'un monomère aromatique de monovinylidène et d'un monomère de nitrile à insaturation éthylénique, facultativement en présence d'un solvant inerte, de manière à former un mélange contenant une phase continue de copolymère matriciel, le copolymère matriciel comprenant 15 à 50 pour cent en poids de motifs, sur la base du poids total du copolymère matriciel, dérivés du monomère de nitrile à insaturation éthylénique, et dans lequel le composant de caoutchouc est dispersé dedans sous la forme de particules de caoutchouc discrètes,
(b) la soumission du mélange résultant à des conditions suffisantes pour éliminer les monomères n'ayant pas réagi et pour réticuler le caoutchouc, et
(c) l'isolement de la composition de copolymère aromatique de monovinylidène modifié par un caoutchouc dans lequel les particules de caoutchouc ont une taille moyenne de particule de caoutchouc (RPS) supérieure ou égale à 5 microns telle que déterminée par diffusion de la lumière par LS23O et la matrice a un poids moléculaire moyen en poids (Mw) représenté par la formule suivante :

$$Mw \geq 155 - 10^{-6}.RPS^{6}$$

et

(B) la (co)extrusion de ladite composition de copolymère aromatique de monovinylidène modifié par un caoutchouc pour obtenir une feuille, un tube, un film ou un profilé (co) extrudé (e) .

**12.** Procédé de production d'un article fabriqué par thermoformage ou formage sous vide à partir d'une feuille ou d'un film (co)extrudé(e) composé(e) d'une composition de copolymère aromatique de monovinylidène modifié par un caoutchouc et polymérisé en masse comprenant les étapes suivantes :

(A) la préparation d'une composition de copolymère aromatique de monovinylidène modifié par un caoutchouc et polymérisé en masse par :

(a) la polymérisation selon les techniques de la polymérisation en masse ou en masse/solution en présence d'un composant de caoutchouc dissous, d'un monomère aromatique de monovinylidène et d'un monomère de nitrile à insaturation éthylénique, facultativement en présence d'un solvant inerte, de manière à former

un mélange contenant une phase continue de copolymère matriciel, le copolymère matriciel comprenant 15 à 50 pour cent en poids de motifs, sur la base du poids total du copolymère matriciel, dérivés du monomère de nitrile à insaturation éthylénique, et dans lequel le composant de caoutchouc est dispersé dedans sous la forme de particules de caoutchouc discrètes,
(b) la soumission du mélange résultant à des conditions suffisantes pour éliminer les monomères n'ayant pas réagi et pour réticuler le caoutchouc, et
(c) l'isolement de la composition de copolymère aromatique de monovinylidène modifié par un caoutchouc dans lequel les particules de caoutchouc ont une taille moyenne de particule de caoutchouc (RPS) supérieure ou égale à 5 microns telle que déterminée par diffusion de la lumière par LS230 et la matrice a un poids moléculaire moyen en poids (Mw) représenté par la formule suivante :

$$Mw \geq 155 - 10^{-6}.RPS^{6}$$

(B) la (co)extrusion de ladite composition de copolymère aromatique de monovinylidène modifié par un caoutchouc pour obtenir une feuille ou un film (co)extrudé(e), et
(C) le thermoformage ou formage sous vide de la feuille ou du film (co)extrudé(e) pour obtenir un article fabriqué.

**13.** Procédé de production d'une feuille, d'un film ou d'un profilé stratifié(e) composé(e) d'une composition de copolymère aromatique de monovinylidène modifié par un caoutchouc et polymérisé en masse comprenant les étapes suivantes :

(A) la préparation d'une composition de copolymère aromatique de monovinylidène modifié par un caoutchouc et polymérisé en masse par :

(a) la polymérisation selon les techniques de la polymérisation en masse ou en masse/solution en présence d'un composant de caoutchouc dissous, d'un monomère aromatique de monovinylidène et d'un monomère de nitrile à insaturation éthylénique, facultativement en présence d'un solvant inerte, de manière à former un mélange contenant une phase continue de copolymère matriciel, le copolymère matriciel comprenant 15 à 50 pour cent en poids de motifs, sur la base du poids total du copolymère matriciel, dérivés du monomère de nitrile à insaturation éthylénique, et dans lequel le composant de caoutchouc est dispersé dedans sous la forme de particules de caoutchouc discrètes,
(b) la soumission du mélange résultant à des conditions suffisantes pour éliminer les monomères n'ayant pas réagi et pour réticuler le caoutchouc, et
(c) l'isolement de la composition de copolymère aromatique de monovinylidène modifié par un caoutchouc dans lequel les particules de caoutchouc ont une taille moyenne de particule de caoutchouc (RPS en micron) supérieure ou égale à 5 microns telle que déterminée par diffusion de la lumière par LS230 et la matrice a un poids moléculaire moyen en poids (Mw en kg/mole) représenté par la formule suivante :

$$Mw \geq 155 - 10^{-6}.RPS^{6}$$

(B) le calandrage de ladite composition de copolymère aromatique de monovinylidène modifié par un caoutchouc pour obtenir un film, et
(C) la stratification du film sur une feuille, un film ou un profilé thermoplastique (co)extrudé(e) pour former une feuille, un film ou un profilé stratifié(e).

**14.** Procédé selon la revendication 13 comprenant en outre l'étape suivante :

(D) le thermoformage ou formage sous vide de la feuille ou du film stratifié(e) pour obtenir un article fabriqué.

**15.** Procédé selon la revendication 12 ou 14 dans lequel l'article thermoformé ou obtenu par formage sous vide est un élément de construction, une pièce automobile, une pièce de bateau, une pièce d'avion, une pièce de camion, une pièce de camionnette, une pièce d'autobus, une pièce de véhicule de loisir, une pièce de matériel informatique, une pièce de meuble, un panneau diffuseur ou une pièce d'appareil électroménager.

**16.** Composition selon la revendication 1 sous la forme d'une feuille, d'un film, d'un tube ou d'un profilé (co)extrudé(e).

**17.** Composition selon la revendication 1 sous la forme d'un article thermoformé ou obtenu par formage sous vide.

**18.** Article selon la revendication 17 qui est un élément de construction, une pièce automobile, une pièce de bateau, une pièce d'avion, une pièce de camion, une pièce de camionnette, une pièce d'autobus, une pièce de véhicule de loisir, une pièce de matériel informatique, une pièce de meuble, un panneau diffuseur ou une pièce d'appareil électroménager.

FIG. 1

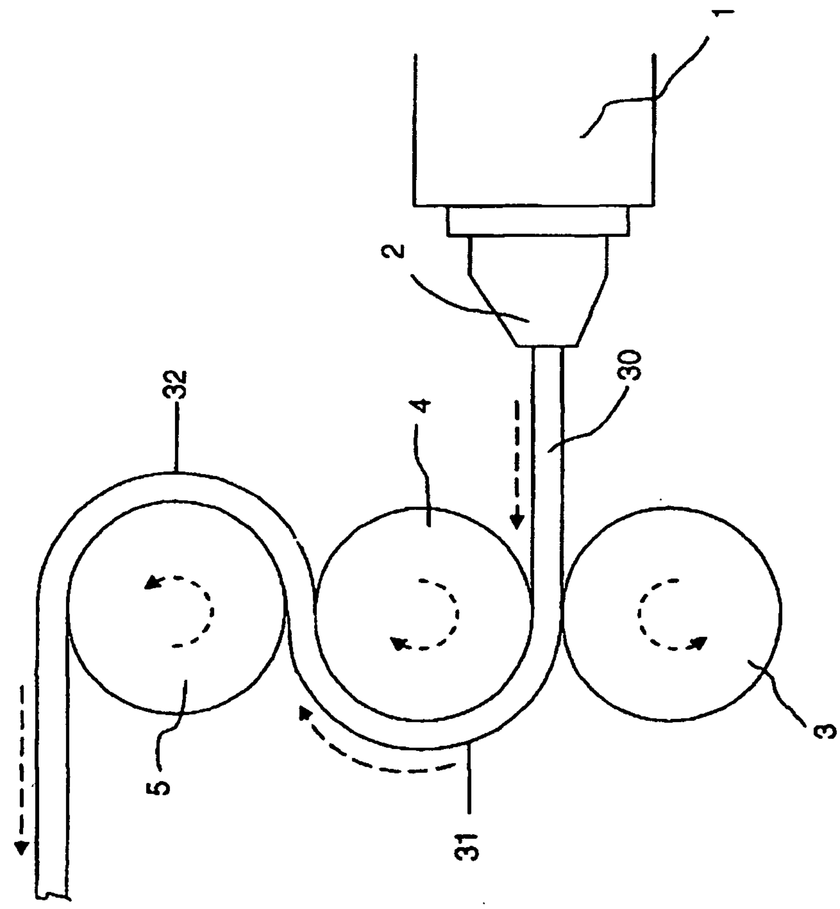

FIG. 2

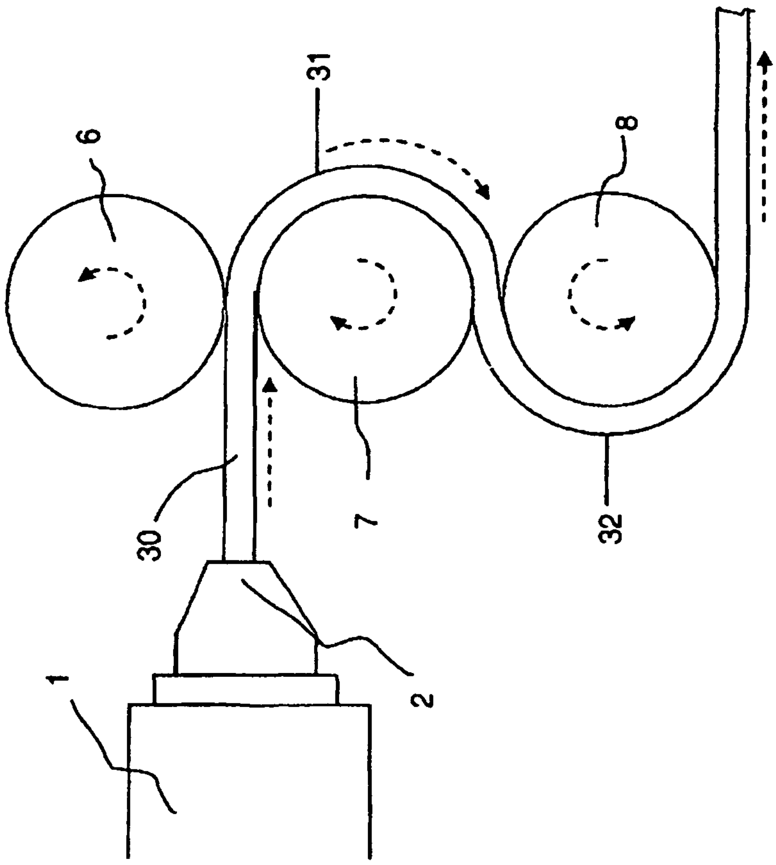

FIG. 3

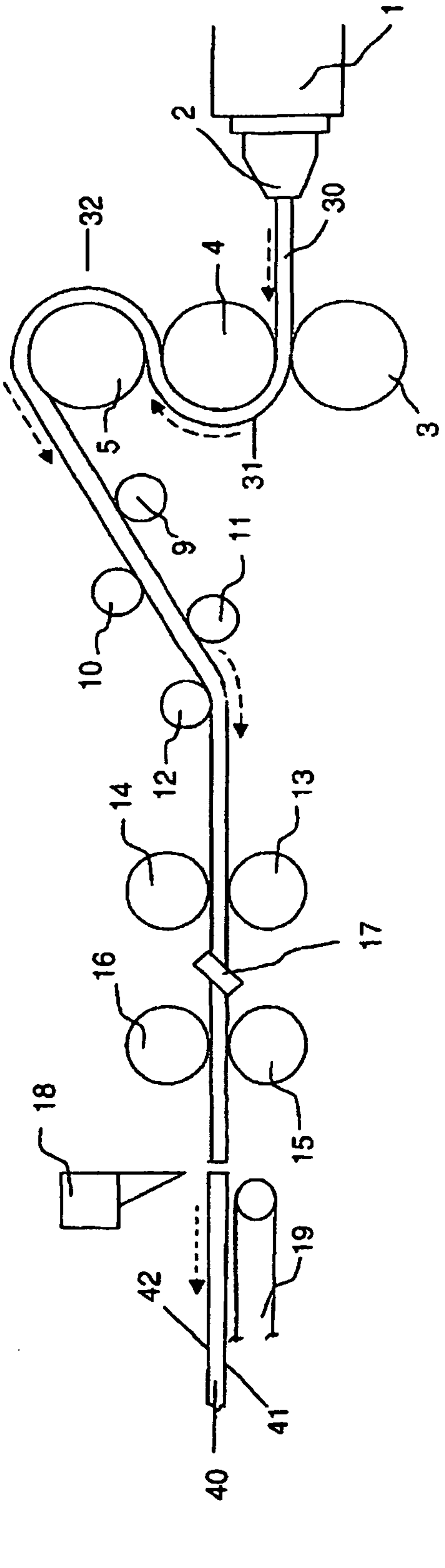

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3660535 A
- US 3243481 A
- US 4239863 A
- US 2727884 A
- EP 412801 A
- US 5412036 A
- US 5446103 A
- US 4666987 A
- US 4572819 A
- US 4585825 A
- US 3265765 A
- GB 1130485 A
- US 4183877 A
- US 4340690 A
- US 4340691 A
- US 3668162 A
- US 4182818 A
- US 4264749 A
- US 3668263 A
- US 3787510 A
- US 3280084 A
- US 3281383 A


### Non-patent literature cited in the description


- Modern Styrenic Polymers. Series In Polymer Science. Wiley
- **B.C. ALLPORT et al.** Block Copolymers. Applied Science Publishers Ltd, 1973
- **R. N. YOUNG ; C. J. FETTERS.** *Macromolecules,* vol. II (5), 8